# EUROPEAN PATENT APPLICATION

(11) **EP 4 383 429 A1**
(43) Date of publication of application: **12.06.2024**
(21) Application number: 21968644.1
(22) Date of filing: 24.12.2021
(51) Int. Cl.: H01M 50/289

(54) **BATTERY, POWER CONSUMPTION DEVICE, PREPARATION METHOD FOR BATTERY, AND MANUFACTURING MOLD**

(71) Applicant: Contemporary Amperex Technology Co., Limited, Ningde, Fujian 352100 (CN)
(72) Inventor: WANG, Yongguang, Ningde, Fujian 352100 (CN); CHEN, Yifeng, Ningde, Fujian 352100 (CN); HUANG, Yangzhi, Ningde, Fujian 352100 (CN); JI, Jinqing, Ningde, Fujian 352100 (CN); SUN, Zhanyu, Ningde, Fujian 352100 (CN)
(74) Representative: Holt, Lucy Rose
(86) International application number: PCT/CN2021/141055
(87) International publication number: WO 2023/115505

(57) **Abstract**

Embodiments of the present application relate to the technical field of batteries, and in particular, to a battery, a power consumption device, a preparation method for the battery, and a manufacturing mold. The battery comprises a frame body, a plurality of battery cells and a binder, the frame body is provided with an accommodating cavity, and the accommodating cavity is provided with an opening in a first direction; the plurality of battery cells are disposed in the accommodating cavity, and the electrode terminals of the battery cells face the opening; the binder is disposed in the accommodating cavity, and the binder is connected to the plurality of battery cells and the frame body. According to the battery provided by the present application, the relative displacement between the battery cells can be prevented or reduced, and the electrical connection stability of the battery is improved.

## Description

### TECHNICAL FIELD

Embodiments of the present application relate to the technical field of batteries, and in particular relate to a battery, an electric device, and a production method and a manufacturing die of the battery.

### BACKGROUND

A battery generally includes a case and a plurality of battery cells, and there is usually a specified gap between a battery cell and an adjacent component. In this case, the battery cell will vibrate, resulting in poor electrical connection stability and structural reliability inside the battery. Therefore, during a manufacturing process of a battery, it is necessary to fix battery cells to prevent the battery cells from vibrating in a case.

Generally, battery cells are fixed by a bonding agent, that is, the bonding agent is injected between two adjacent battery cells and then cured to connect the two adjacent battery cells, thereby reducing the vibrating of the battery cells.

However, after battery cells in a battery are fixed by a bonding agent, with the change of a use environment of the battery, there is still a relative position shift between the battery cells, resulting in poor electrical connection stability of the battery.

### SUMMARY

In view of the above problems, embodiments of the present application provide a battery, a production method of the battery, and an electric device including the battery, and the battery can prevent or reduce a relative displacement among battery cells and improve the electrical connection stability of the battery.

According to a first aspect of the embodiments of the present application, a battery is provided, including a frame body, a plurality of battery cells, and a bonding agent, where the frame body is provided with an accommodating cavity, and the accommodating cavity is provided with an opening in a first direction; the plurality of battery cells are arranged in the accommodating cavity, and electrode terminals of the plurality of battery cells face towards the opening; and the bonding agent is arranged in the accommodating cavity, and the bonding agent is used to connect the plurality of battery cells and the frame body.

In the above solution, the plurality of battery cells are arranged in the accommodating cavity, and an inner wall of the accommodating cavity itself can limit positions of the plurality of battery cells to prevent a displacement among the battery cells in the accommodating cavity; the frame body and the plurality of battery cells are integrated by the bonding agent, such that a stable relative position relationship is established among the plurality of battery cells to prevent a displacement among the battery cells in a direction of the opening of the accommodating cavity; and further, the frame body can limit a deformation range of the bonding agent, and when a temperature is too high or too low, the bonding agent will not undergo a large deformation among the battery cells due to a limitation of the frame body and thus will not cause a displacement among the battery cells, such that positions of the plurality of battery cells are relatively fixed, which improves the electrical connection stability of the battery.

In some embodiments, the bonding agent is in a columnar structure in the accommodating cavity, and an outer peripheral surface of the columnar structure is connected with an inner surface of the frame body.

In the above solution, a shape of the columnar structure is regular, which can prevent the bonding agent from sticking to a part of the battery that does not need to be bonded; the outer peripheral surface of the columnar structure is connected with the inner surface of the frame body to allow a firm connection between the bonding agent and the frame body; and the frame body limits a deformation of the bonding agent from the entire outer peripheral surface of the columnar structure to further reduce a degree of thermal expansion and contraction of the bonding agent, prevent a displacement among the plurality of battery cells under dragging of the bonding agent, and improve the electrical connection stability of the battery.

In some embodiments, the bonding agent is in a columnar structure in the accommodating cavity, the columnar structure is provided with a connection hole in the first direction, and an inner peripheral surface of the connection hole is connected with an outer peripheral surface of each of the plurality of battery cells.

In the above solution, the inner peripheral surface of the connection hole is connected with an outer peripheral surface of each of the plurality of battery cells to further prevent the bonding agent from sticking to a part of the battery that does not need to be bonded, increase a connection area between the plurality of battery cells and the bonding agent, and prevent a displacement among the plurality of battery cells, such that a stable relative position relationship is established among the plurality of battery cells.

In some embodiments, a height of the bonding agent in the first direction is less than a height of each of the plurality of battery cells in the first direction.

In the above solution, the bonding agent can connect the plurality of battery cells in the accommodating cavity and the frame body, and the bonding agent is used at a small amount, which reduces not only a manufacturing cost of the battery, but also a weight of the battery.

In some embodiments, the battery further includes a bonding agent-blocking member, where the bonding agent-blocking member is connected with an end of the bonding agent in the first direction.

In the above solution, the bonding agent-blocking member can prevent the bonding agent from flowing in the first direction, and thus prevent the bonding agent from sticking to a part of a battery cell that does not need to be bonded, which affects the charge and discharge performance of the battery cell.

According to a second aspect of embodiments of the present application, a production method of a battery is provided to manufacture the battery described in any embodiment in the first aspect, and the production method includes:
providing a lower die, and arranging a plurality of battery cells in the lower die;
providing a frame body, and sleeving the frame body outside the plurality of battery cells, where an end of the frame body that is provided with an opening abuts against a surface of the lower die;
injecting a bonding agent into the frame body; and
separating the lower die from the plurality of battery cells and the frame body.

In the above solution, the frame body cooperates with the lower die during a production process of the battery to define a flowing space for the bonding agent, such that the bonding agent can only circulate in the space defined by the lower die and the frame body, and connects the plurality of battery cells and the frame body as a whole in the space, thereby preventing the bonding agent from flowing freely to cause poor bonding to a battery cell; and after the lower die is separated from the plurality of battery cells and the frame body, the frame body can also serve as a part of the battery to prevent a displacement among the battery cells and improve the electrical connection stability of the battery. In addition, the frame body is not only a part of the battery, but also a part of a die for manufacturing the battery, which reduces a demolding procedure after the bonding agent is injected.

In some embodiments, before the bonding agent is injected into the frame body, the production method of a battery further includes:
providing an upper die, arranging the upper die at an end of the frame body that is away from the lower die, and allowing the upper die to limit the plurality of battery cells; and
after the bonding agent is injected into the frame body, the production method of a battery further includes: separating the upper die from the plurality of battery cells and the frame body.

In the above solution, the upper die limits the plurality of battery cells from an end of each of the plurality of battery cells that is away from the lower die, which can prevent the plurality of battery cells from tilting or moving under an impact of the bonding agent to deviate from a predetermined position.

In some embodiments, providing an upper die, arranging the upper die at an end of the frame body that is away from the lower die, and allowing the upper die to limit the plurality of battery cells further includes: connecting the upper die with the lower die to sandwich the plurality of battery cells and the frame body between the upper die and the lower die.

In the above solution, the upper die and the lower die both can be used repeatedly, and thus when the upper die and the lower die are connected, a connection structure can be arranged on the upper die and the lower die and can be used repeatedly; and because the battery cells and the frame body need to be assembled in the battery, if the connection structure is arranged on the battery cells or the frame body, a utilization rate of the connection structure will be low, resulting in an increased cost. Therefore, in the above solution, the battery cells and the frame body are sandwiched between the upper die and the lower die for fixing to avoid a cost waste. In addition, during demolding, it is only necessary to disconnect the upper die and the lower die to separate the battery cells and the frame body from the upper die and the lower die, which simplifies a manufacturing process of the battery.

In some embodiments, before the bonding agent is injected into the frame body, the production method of a battery further includes: providing a bonding agent-blocking member, and arranging the bonding agent-blocking member in the lower die to prevent the bonding agent from sticking to the lower die.

In the above solution, the bonding agent-blocking member isolates the lower die and the bonding agent, such that the cured bonding agent is stuck to the bonding agent-blocking member instead of the lower die, which facilitates the separation of the lower die from the battery cells and the frame body.

In some embodiments, before the bonding agent is injected into the frame body, the production method of a battery further includes: providing a harness pipeline, and arranging the harness pipeline on the lower die and in the frame body to make the bonding agent avoid the harness pipeline to form a harness channel.

In the above solution, when the plurality of battery cells are subjected to an electrical connection or data such as temperatures and voltages of the battery cells are acquired, a harness needs to be connected to a battery cell, and the harness can be led from one end of the battery cell to the other end of the battery cell through the harness channel in the frame body without passing through an outside of the frame body, which can prevent the harness from being damaged due to squeezing or dragging outside the frame body, thereby protecting the harness.

According to a third aspect of the embodiments of the present application, a manufacturing die of a battery is provided to manufacture the battery described in any embodiment in the first aspect, where the manufacturing die includes a lower die, and the lower die includes a lower positioning part and a lower positioning surface, where the lower positioning part is configured to fix a plurality of battery cells from one end of each of the plurality of battery cells, and the lower positioning surface is arranged around the lower positioning part to abut against an end of a frame body that is provided with an opening.

In the above solution, the lower positioning part fixes the plurality of battery cells at predetermined positions; and because the lower positioning surface is arranged around the lower positioning part, when the end of the frame body that is provided with the opening abuts against the lower positioning surface, the plurality of battery cells fixed by the lower positioning part are just located in the accommodating cavity of the frame body, which allows the positioning between the plurality of battery cells and the frame body. Therefore, the use of the die in the above solution can allow accurate positioning among the plurality of battery cells, and can also allow accurate positioning between the plurality of battery cells and the frame body, resulting in high manufacturing accuracy and manufacturing efficiency of the battery.

In some embodiments, the lower positioning part includes a plurality of lower positioning slots, and an inner peripheral wall of each of the plurality of lower positioning slots coincides with an outer peripheral wall of a corresponding battery cell to fix the battery cell.

In the above solution, by making an inner peripheral wall of each of the plurality of lower positioning slots coincide with an outer peripheral wall of a corresponding battery cell to fix the battery cell, both a movement of the battery cell in a vertical direction and a movement of the battery cell in another direction can be restricted to prevent the battery cell from vibrating, thereby increasing an accuracy of a position of the battery cell.

In some embodiments, the plurality of lower positioning slots each are provided with an avoidance groove to avoid an electrode terminal of a corresponding battery cell.

In the above solution, an electrode terminal is located in the avoidance groove and thus is not easily damaged due to squeezing, which improves a yield rate of the battery.

In some embodiments, the manufacturing die further includes an upper die; and the upper die includes an upper positioning part, and the upper positioning part is arranged corresponding to the lower positioning part and is configured to fix the plurality of battery cells from the other end of each of the plurality of battery cells.

In the above solution, the plurality of battery cells are further fixed by the upper positioning part of the upper die, and the upper positioning part defines a position of each of the plurality of battery cells from the other end of the battery cell to prevent the battery cell from tilting and moving, thereby increasing an accuracy of a position of the battery cell.

In some embodiments, the upper positioning part includes a plurality of upper positioning slots, and an inner peripheral wall of each of the plurality of upper positioning slots coincides with an outer peripheral wall of a corresponding battery cell to fix the battery cell.

In the above solution, by making an inner peripheral wall of each of the plurality of upper positioning slots coincide with an outer peripheral wall of a corresponding battery cell to fix the battery cell, both a movement of the battery cell in a vertical direction and a movement of the battery cell in another direction can be restricted to prevent the battery cell from vibrating, thereby increasing an accuracy of a position of the battery cell.

In some embodiments, the manufacturing die further includes a connection member, and the connection member is arranged on the lower die and/or the upper die and is configured to connect the upper die and the lower die to sandwich the plurality of battery cells and the frame body between the upper die and the lower die.

In the above solution, the upper die and the lower die both can be used repeatedly, and thus the connection member arranged on the lower die and/or the upper die can be used repeatedly, which can avoid a cost waste. In addition, during demolding, it is only necessary to disconnect the upper die and the lower die to separate the battery cells and the frame body from the upper die and the lower die, which simplifies a manufacturing process of the battery.

In some embodiments, the lower die includes a side plate, the side plate is located at a side of the lower die at which the lower positioning part is located, and the side plate is connected with the upper die through the connection member.

In the above solution, the side plate is close to the upper die and thus is connected with the upper die in close proximity, which can reduce a volume of the connection member.

In some embodiments, the connection member includes a buckle.

In the above solution, the connection and separation of the upper die and the lower die both are simple and fast, which can improve the manufacturing efficiency of the battery.

According to a third aspect of the embodiments of the present application, an electric device including the battery described in any embodiment in the first aspect of the present application is provided.

In the above solution, the battery has excellent electrical connection stability and thus can stably output a current to power the electric device.

In the embodiments of the present application, by arranging the plurality of battery cells in the accommodating cavity of the frame body and connecting the plurality of battery cells and the frame body through the bonding agent, positions of the plurality of battery cells are relatively fixed, which improves the electrical connection stability of the battery.

The above description is merely a summary of the technical solutions of the present application. In order to allow the technical means of embodiments of the present application to be understood clearly and implemented in accordance with the content of the specification and allow the above and other objectives, features, and advantages of embodiments of the present application to be obviously and easily understood, specific implementations of the present application are described below.

### BRIEF DESCRIPTION OF THE DRAWINGS

To describe the technical solutions of the embodiments of the present application clearly, the accompanying drawings required for describing the embodiments are briefly described below. Apparently, the accompanying drawings in the following description show merely some embodiments of the present application, and those of ordinary skill in the art may still derive other accompanying drawings from these accompanying drawings without creative efforts.
FIG. 1 is a schematic structural diagram of an electric device in an embodiment of the present application;
FIG. 2 is a schematic structural diagram of a battery in an embodiment of the present application;
FIG. 3 is a schematic exploded structural view of the battery shown in FIG. 2;
FIG. 4 is a schematic exploded structural view of a battery in another embodiment of the present application;
FIG. 5 is a flow chart of a production method of a battery in an embodiment of the present application;
FIG. 6 is a schematic exploded structural view of each component of a battery manufactured according to the production method of a battery shown in FIG. 5 and a lower die;
FIG. 7 is a flow chart of a production method of a battery in another embodiment of the present application;
FIG. 8 is a schematic exploded structural view of each component of a battery manufactured according to the production method of a battery shown in FIG. 7 and upper and lower dies;
FIG. 9 is a flow chart of a production method of a battery in another embodiment of the present application;
FIG. 10 is a flow chart of a production method of a battery in another embodiment of the present application;
FIG. 11 is a schematic exploded structural view of each component of a battery manufactured according to the production method of a battery shown in FIG. 10 and a lower die;
FIG. 12 is a flow chart of a production method of a battery in another embodiment of the present application;
FIG. 13 is a schematic exploded structural view of each component of a battery manufactured according to the production method of a battery shown in FIG. 12 and a lower die;
FIG. 14 is a schematic structural diagram of a manufacturing die of a battery in an embodiment of the present application;
FIG. 15 is a schematic structural diagram of a manufacturing die of a battery in another embodiment of the present application;
FIG. 16 is a schematic structural diagram of an upper die in an embodiment of the present application; and
FIG. 17 is a schematic structural diagram of an assembly state of an upper die, a lower die, a frame body, and battery cells.

Reference numerals: 2: automobile; 200: battery; 210: controller; 220: motor; 201: battery cell; 2011: electrode terminal; 202: bonding agent; 2021: connection hole; 203: frame body; 2031: accommodating cavity; 2032: opening; 204: cover body; 205: sampling board; 206: sampling harness; 207: battery management system (BMS) assembly; 208: bonding agent-blocking member; 300: lower die; 301: lower positioning part; 3011: lower positioning slot; 3012: avoidance groove; 302: lower positioning surface; 303: side plate; 400: upper die; 401: upper positioning part; 4011: upper positioning slot; 500: buckle; 501: body part; 5011: hanging ring; 502: lapping part; 5021: hook; 600: harness pipeline; and 601: harness channel.

### DETAILED DESCRIPTION OF THE EMBODIMENTS

In order to make the objectives, technical solutions, and advantages of the embodiments of the present application clear, the technical solutions in the embodiments of the present application are clearly and completely described below with reference to the accompanying drawings in the embodiments of the present application. Apparently, the described embodiments are some rather than all of the embodiments of the present application. All other embodiments obtained by a person of ordinary skill in the art based on the embodiments of the present application without creative efforts shall fall within the protection scope of the present application.

Unless otherwise defined, all technical and scientific terms used herein have the same meanings as commonly understood by those skilled in the technical field of the present application. The terms used in the specification of the present application are merely intended to describe the specific embodiments, rather than limit the present application.

The terms "includes" and "has" in the specification, claims, and accompanying drawings of the present application and any variations thereof are intended to encompass without excluding other content. The term "one" or "a" does not exclude a case that there are a plurality of elements.

The term "embodiment" mentioned herein means that a specific feature, structure, or characteristic described in combination with the embodiment may be included in at least one embodiment of the present application. The term "embodiment" appearing in different parts of the specification does not necessarily refer to a same embodiment or an independent or alternative embodiment exclusive of other embodiments. It may be explicitly or implicitly appreciated by those skilled in the art that the embodiments described herein may be combined with other embodiments.

The term "and/or" in this specification merely describes an association relationship between associated objects, and indicates that three types of relationships may exist. For example, A and/or B may indicate that A exists alone, A and B coexist, or B exists alone. In addition, the character "/" in this specification generally indicates that the associated objects are in an "or" relationship.

Orientation terms appearing in the following description indicate the directions shown in the accompanying drawings, and do not limit a specific structure of the battery or the electric device or the manufacturing die of a battery in the present application. For example, in the description of the present application, orientations or position relationships indicated by the terms such as "central", "longitudinal", "'transverse", "length", "width", "thickness", "upper", "lower", "front", "back", "left", "right", "vertical", "horizontal", "top", "bottom", "inner", "outer", "clockwise", "anticlockwise", "axial", "radial", and "circumferential" are orientations or position relationships shown based on the accompanying drawings, and these terms are merely intended to facilitate a simple description of the present application, rather than to indicate or imply that the mentioned apparatus or element must have the specific orientation or be constructed and operated in the specific orientation. Therefore, these terms may not be construed as a limitation to the present application.

Moreover, the terms such as "X direction", "Y direction", and "Z direction" to indicate directions of an operation and a construction of each component of the battery or the electric device or the manufacturing die of a battery in the embodiment are not absolute but relative. Although these directions are appropriate when each component of the battery is at a position shown in the accompanying drawings, these directions should be interpreted differently to correspond to a change when the position changes.

The terms such as "first" and "second" used in the specification and claims of the present application or the above accompanying drawings are intended to distinguish different objects rather than indicate a particular order, and may explicitly or implicitly include one or more corresponding features.

In the description of the present application, unless otherwise specified, "a plurality of" refers to two or more, and similarly, "a plurality of groups" refers to two or more groups.

In the description of the present application, it should be stated that, unless otherwise expressly defined, the terms "arrangement", "connection with", and "connection to" should be understood in a board sense. For example, the "connection with" or "connection to" of mechanical structures may refer to a physical connection, for example, the physical connection may be a fixed connection, such as a fixed connection through a fastener, or a fixed connection through a screw, a bolt, or another fastener; the physical connection may also be a detachable connection, such as a clamped connection or a buckled connection; and the physical connection may also be an integrated connection, such as a connection through welding, bonding, or integral forming. The "connection with" or "connection to" of circuit structures can refer to not only a physical connection, but also an electrical connection or a signal connection. For example, the circuit structures may be directly connected, namely, a physical connection; or the circuit structures can be indirectly connected through at least one intermediate element, as long as the circuit structures can communicate with each other; or the circuit structures may be internally connected. In addition to signal connection through a circuit, the signal connection can refer to a signal connection through a medium, such as a radio wave. Those of ordinary skill in the art may understand the specific meanings of the above terms in the present disclosure based on specific situations.

A battery generally includes a case and a plurality of battery cells, where the plurality of battery cells are arranged in the case; and the plurality of battery cells are electrically connected through bus parts, for example, the bus parts are aluminum bars or copper bars. One end of a bus part is connected with a battery cell, and the other end of the bus part is connected with another battery cell, such as to allow an electrical connection between these two battery cells. Generally, the bus parts are arranged according to series and parallel connection relationships among the plurality of battery cells and relative positions of the plurality of battery cells. For example, a bus part is subjected to a welded connection with an electrode terminal of a battery cell requiring an electrical connection, and a series, parallel, or series-parallel connection among the plurality of battery cells is conducted through one or more bus parts, where a series-parallel circuit refers to a hybrid circuit including series and parallel connections.

In order to facilitate the arrangement of the plurality of battery cells in the case, there is usually a specified gap between a battery cell and an adjacent component, for example, there is a gap between a battery cell and an adjacent battery cell, or there is a gap between a battery cell and a wall of the case. When the battery is arranged in an electric device, the electric device often undergoes shaking, vibration, and other conditions during use, and the gap makes a position of a battery cell change with the shaking and vibration of the electric device, for example, the battery cell tilts or undergoes a displacement. A change of a position of a battery cell may cause a stress between the battery cell and another component. For example, a battery cell and a wall of a case squeeze each other to cause a rupture; and a battery cell exerts a tensile force on a bus part, such that the welding between the bus part and an electrode terminal of the battery cell is loose, and even the bus part is torn.

A change of a position of a battery cell will deteriorate the electrical connection stability and structural reliability inside a battery. Therefore, during a manufacturing process of a battery, it is necessary to fix a battery cell to prevent the battery cell from shaking in a case.

In the prior art, battery cells are often fixed by a bonding agent, that is, the bonding agent is injected between two adjacent battery cells to connect the two adjacent battery cells, thereby reducing the shaking of the battery cells. However, after battery cells in a battery are fixed by a bonding agent, with the change of a use environment of the battery, there is still a relative position shift between the battery cells, resulting in poor electrical connection stability of the battery.

According to long-term research by the inventors, there is still a specified gap between a plurality of battery cells and a wall of a case of a battery after the plurality of battery cells are connected by the bonding agent, and thus when a battery is bumped or vibrated during use, the plurality of battery cells connected together will still vibrate to varying degrees, and the bonding agent may also gradually crack and be separated from the battery cells with the vibration of the battery cells; and some bonding agents such as styrofoam have a loose and porous structure and a low strength after being cured, and thus with a change of a temperature, these bonding agents undergo thermal expansion and contraction, that is, at a high temperature, a volume of a bonding agent increases and thus drives battery cells connected with the bonding agent to move away from each other; and at a low temperature, a volume of a bonding agent decreases and thus drives battery cells connected with the bonding agent to move close to each other. The above conditions all may lead to poor electrical connection stability of a battery.

In view of this, the embodiments of the present application provide a battery, where a deformation of a bonding agent and a movement range of a battery cell are limited through a frame body, thereby preventing or reducing a relative displacement between battery cells to improve the electrical connection stability of the battery.

The battery cells provided by the embodiments of the present application may be suitable for various devices using batteries, such as mobile phones, portable devices, laptops, electric motorcycles, electric toys, electric tools, electric vehicles, ships, and spacecraft. For example, the spacecraft includes airplanes, rockets, spaceshuttles, and spaceships, but is not limited thereto.

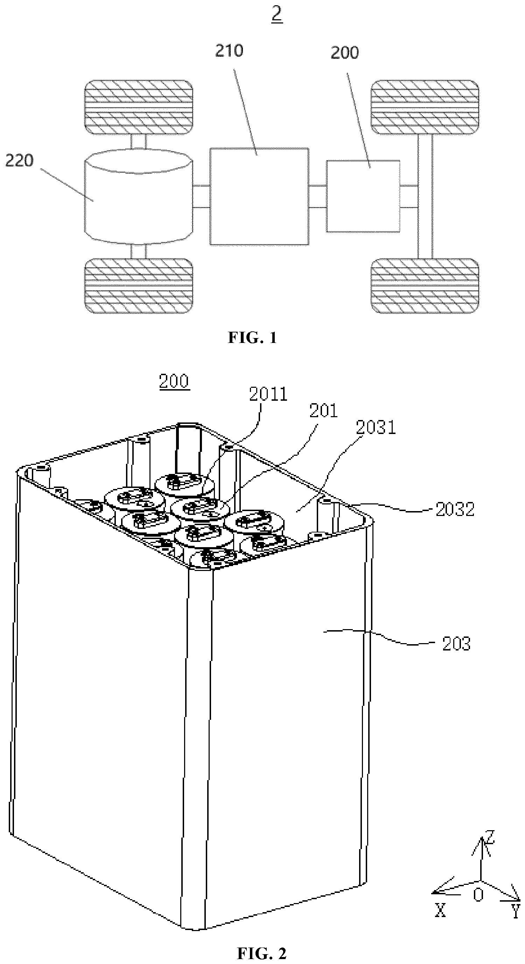

FIG. 1 is a schematic structural diagram of an electric device provided in an embodiment of the present application. As shown in FIG. 1, for example, the electric device may be an automobile 2, and the automobile 2 may be a fuel vehicle, a gas vehicle, or a new energy vehicle, where the new energy vehicle may be a pure electric vehicle, a hybrid electric vehicle (HEV), or a range-extended electric vehicle (REEV). The automobile 2 includes a battery 200, a controller 210, and a motor 220. The battery 200 is provided to power the controller 210 and the motor 220 and serves as an operation power supply and a drive power supply of the automobile 2. For example, the battery 200 is provided to meet power demands of starting, navigation, and operation of the automobile 2. For example, the battery 200 powers the controller 210, the controller 210 controls the battery 200 to power the motor 220, and the motor 220 receives and uses a power of the battery 200 as a drive power supply of the automobile 2, thereby replacing or partially replacing a fuel or a natural gas to provide a drive power for the automobile 2.

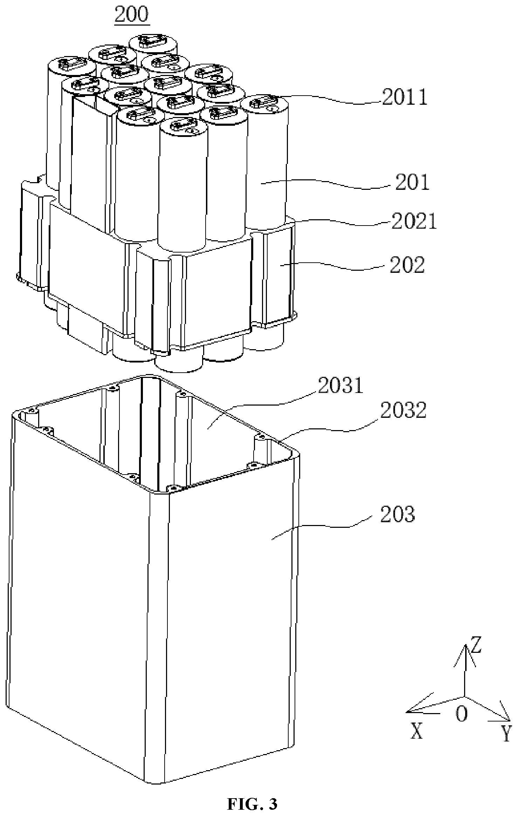

FIG. 2 is a schematic structural diagram of the battery provided in the present application and FIG. 3 is a schematic exploded structural view of the battery in FIG. 2. As shown in FIG. 2 and FIG. 3, the battery 200 includes a frame body 203, a plurality of battery cells 201, and a bonding agent 202, where the frame body 203 is provided with an accommodating cavity 2031, and the accommodating cavity 2031 is provided with an opening 2032 in a first direction; the plurality of battery cells 201 are arranged in the accommodating cavity 2031, and electrode terminals 2011 of the plurality of battery cells 201 face towards the opening; and the bonding agent 202 is arranged in the accommodating cavity 2031, and the bonding agent 202 is used to connect the plurality of battery cells 201 and the frame body 203.

The plurality of battery cells 201 may include lithium-ion battery (LIB) cells, lithium-sulfur battery (LSB) cells, sodium/lithium-ion battery cells, sodium-ion battery (SIB) cells, magnesium-ion battery (MIB) cells, or the like, but the embodiments of the present application are not limited thereto. The plurality of battery cells 201 may be in a cylindrical shape, a flat shape, a cuboid shape, or another shape, but the embodiments of the present application are not limited thereto. The plurality of battery cells 201 may generally be divided into the following three types according to a packaging manner: cylindrical battery cells, cubic battery cells, and pouch battery cells, but the embodiments of the present application are not limited thereto.

The plurality of battery cells 201 may each include a shell, an electrode assembly, and an electrolyte, and the electrode assembly includes a cathode plate, an anode, and a separator. The plurality of battery cells mainly rely on the migration of metal ions between the cathode and the anode to work. The cathode includes a cathode current collector and a cathode active material layer, where the cathode active material layer covers a surface of the cathode current collector; a part of the current collector without the cathode active material layer protrudes from a part of the current collector with the cathode active material layer; and a part of the current collector without the cathode active material layer serves as a cathode tab. With an LIB as an example, a material of the cathode current collector can be aluminum, and a cathode active material can be lithium cobalt oxide (LCO), lithium iron phosphate (LFP), ternary lithium, lithium manganese oxide (LMO), or the like. The anode includes an anode current collector and an anode active material layer, where the anode active material layer covers a surface of the anode current collector; a part of the current collector without the anode active material layer protrudes from a part of the current collector with the anode active material layer; and a part of the current collector without the anode active material layer serves as an anode tab. A material of the anode current collector can be copper, and an anode active material can be carbon or silicon. In order to ensure that there is no fusing at a high current, a plurality of cathode tabs are provided and stacked together, and a plurality of anode tabs are provided and stacked together. A material of the separator can be polypropylene (PP) or polyethylene (PE). Further, the electrode assembly may be in a wound structure or a laminated structure, and the embodiments of the present application are not limited thereto.

The shell is provided with an electrode terminal 2011; the electrode terminal 2011 includes a cathode terminal and an anode terminal; the cathode terminal is connected with a cathode tab of the electrode assembly, and the anode terminal is connected with an anode tab of the electrode assembly; and when an electric device is connected with the cathode terminal and the anode terminal, a current flows in or out through the cathode terminal and the anode terminal between the electrode assembly and the electric device, thereby allowing an electrical connection between the battery cell 201 and the electric device.

The frame body 203 is a thin-walled structure and may be provided with one or more openings 2032, where an opening 2032 is formed at an end of the accommodating cavity 2031 in a first direction, or openings 2032 are formed at two ends of the accommodating cavity 2031 in the first direction, respectively; and the first direction may refer to a direction parallel to an orientation of an electrode terminal 2011 of a battery cell 201, for example, as shown in FIG. 2, the electrode terminal 2011 is oriented towards a Z axis, and thus the first direction is defined as a Z-axis direction. When a plurality of electrode terminals 2011 on the battery cell 201 are oriented in a same direction, one opening 2032 may be formed on the frame body 203; and when a plurality of electrode terminals 2011 on the battery cell 201 are oriented in different directions, one opening 2032 is formed corresponding to each electrode terminal 2011, that is, a plurality of openings 2032 are formed on the frame body 203. For example, when the battery cell 201 has two electrode terminals 2011 and the two electrode terminals 2011 are located on two opposite faces of the battery cell 201, two openings 2032 are oppositely formed on the frame body 203.

A material of the frame body 203 may be a metal, such as aluminum, an aluminum alloy, and steel, and may also be a non-metallic material, such as plastic and ceramic. A size of the accommodating cavity 2031 is determined according to a size of an assembly of the plurality of battery cells 201, and when the plurality of battery cells 201 are located in the accommodating cavity 2031, the plurality of battery cells 201 are arranged in a unique manner as much as possible to facilitate the assembly of the battery cells with other components of the battery 200.

The bonding agent 202 fills a gap between battery cells 201 and a gap between a battery cell 201 and an inner wall of the accommodating cavity 2031. After being cured, the bonding agent 202 connects components that can be touched by the bonding agent as a whole, for example, the bonding agent 202 connects the plurality of battery cells 201 and the inner wall of the accommodating cavity 2031 as a whole.

The bonding agent 202 may be a polyurethane (PU) bonding agent, an epoxy resin bonding agent, a polymer latex bonding agent, or any other bonding agent that can be cured. For example, styrofoam, as a common PU bonding agent, can be used to connect the plurality of battery cells 201 and the frame body 203. Based on the principle that styrofoam can undergo foam expansion, the use of a small amount of styrofoam can allow the connection among the plurality of battery cells 201, resulting in a low cost. In addition, the styrofoam has a loose and porous structure and a low weight, such that the use of styrofoam will not increase a weight of the battery 200 too much.

It can be understood that a connection position between the bonding agent 202 and a battery cell 201 needs to avoid an electrode terminal 2011 on the battery cell 201 and a part that an electrical connection among the plurality of battery cells 201 needs to pass through, thereby preventing the normal use of the battery cell 201 from being affected. Optionally, the bonding agent 202 is connected with an outer wall of a shell of a battery cell 201, and the bonding agent 202 may be connected with the entire outer wall of the shell of the battery cell 201, or may be only connected with a part of the outer wall of the shell of the battery cell 201, which is not limited by the embodiments of the present application.

In the above solution, the plurality of battery cells 201 are arranged in the accommodating cavity 2031, and an inner wall of the accommodating cavity 2031 itself can limit positions of the plurality of battery cells 201 to prevent a displacement among the battery cells 201 in the accommodating cavity 2031; the frame body 203 and the plurality of battery cells 201 are integrated by the bonding agent 202, such that a stable relative position relationship is established among the plurality of battery cells 201 to prevent a displacement among the battery cells 201 in a direction of the opening 2032 of the accommodating cavity 2031; and further, the frame body 203 can limit a deformation range of the bonding agent 202, and when a temperature is too high or too low, the bonding agent 202 will not undergo a large deformation among the battery cells 201 due to a limitation of the frame body 203 and thus will not cause a displacement among the battery cells 201, such that positions of the plurality of battery cells 201 are relatively fixed, which improves the electrical connection stability of the battery 200.

As shown in FIG. 3, in some embodiments, the bonding agent 202 is in a columnar structure in the accommodating cavity 2031, and an outer peripheral surface of the columnar structure is connected with an inner surface of the frame body 203.

The columnar structure refers to a structure in which a generatrix is parallel to an axis of the structure and cross sections of the structure at various positions have a same shape and size in an axis direction perpendicular to the structure, where a cross-sectional shape can be any closed shape, such as a circle or rectangle; and a cross-sectional shape can also be a combination of various shapes, for example, an outer shape of a cross section is a rectangle, and a circle is nested in the rectangle. It can be understood that an outer shape of a cross section is formed by an outer peripheral wall of the columnar structure, and a shape nested in an outer shape is formed by a hole inside the structure.

A shape of the columnar structure is regular, which can prevent the bonding agent 202 from sticking to a part of the battery 200 that does not need to be bonded; the outer peripheral surface of the columnar structure is connected with the inner surface of the frame body 203 to allow a firm connection between the bonding agent 202 and the frame body 203; and the frame body 203 limits a deformation of the bonding agent from the entire outer peripheral surface of the columnar structure to further reduce a degree of thermal expansion and contraction of the bonding agent 202, prevent a displacement among the plurality of battery cells 201 under dragging of the bonding agent 202, and improve the electrical connection stability of the battery 200.

As shown in FIG. 3, in some embodiments, the bonding agent 202 is in a columnar structure in the accommodating cavity 2031, the columnar structure is provided with a connection hole 2021 in the first direction, and an inner peripheral surface of the connection hole 2021 is connected with an outer peripheral surface of each of the plurality of battery cells 201.

A shape of the connection hole 2021 adapts to the outer peripheral surface of each of the plurality of battery cells 201, such that the inner peripheral surface of the connection hole 2021 is attached to the outer peripheral surface of the battery cell 201 in an attached manner. For example, when the battery cell 201 is a square battery cell, the connection hole 2021 is a square hole; and when the battery cell 201 is a cylindrical battery cell, the connection hole 2021 is a round hole.

In the above solution, the inner peripheral surface of the connection hole 2021 is connected with an outer peripheral surface of each of the plurality of battery cells 201 to further prevent the bonding agent 202 from sticking to a part of the battery 200 that does not need to be bonded, increase a connection area between the plurality of battery cells 201 and the bonding agent 202, and prevent a displacement among the plurality of battery cells 201, such that a stable relative position relationship is established among the plurality of battery cells 201.

As shown in FIG. 3, in some embodiments, a height of the bonding agent 202 in the first direction is less than a height of each of the plurality of battery cells 201 in the first direction.

In the above solution, the bonding agent 202 can connect the plurality of battery cells 201 in the accommodating cavity 2031 and the frame body 203, and the bonding agent 202 is used at a small amount, which reduces not only a manufacturing cost of the battery 200, but also a weight of the battery 200. In addition, the bonding agent 202 is merely connected with an outer peripheral wall of each of the plurality of battery cells 201 and is not connected with the two ends of each of the plurality of battery cells 201 in the first direction, such that the bonding agent avoids important components such as an electrode terminal 2011 at an end of each of the plurality of battery cells 201, which prevents the bonding agent from sticking to these components to affect the charge and discharge performance of the battery 200.

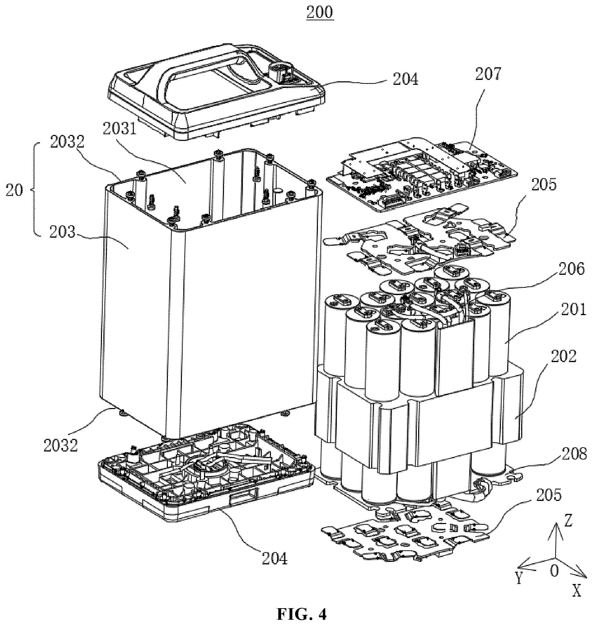

FIG. 4 is a schematic exploded structural view of another battery in an embodiment of the present application. As shown in FIG. 4, in some embodiments, the battery 200 further includes a bonding agent-blocking member 208, where the bonding agent-blocking member 208 is connected with an end of the bonding agent 202 in the first direction.

The bonding agent-blocking member 208 may be a non-metallic film, a metallic sheet, or a non-metallic sheet, for example, the bonding agent-blocking member 208 is a plastic film, an aluminum sheet, a plastic sheet, or a foam sheet. There may be one bonding agent-blocking member 208, and the one bonding agent-blocking member 208 is connected with an end of the bonding agent 202 in the first direction; and there may be also two bonding agent-blocking members 208, and the two bonding agent-blocking members 208 are connected with two ends of the bonding agent 202 in the first direction, respectively.

The bonding agent-blocking member 208 is connected with an end of the bonding agent 202 to prevent the bonding agent 202 from flowing in the first direction and thus prevent the bonding agent 202 from sticking to a part of a battery cell 201 that does not need to be bonded, which affects the charge and discharge performance of the battery cell 201. As shown in FIG. 4, in some embodiments, the battery 200 further includes a sampling board 205, a sampling harness 206, and a BMS assembly 207, where the sampling board 205 and the sampling harness 206 are configured to acquire state parameters of each battery cell 201 in real time and send these state parameters to the BMS assembly 207, and the state parameters include, but are not limited to, a voltage, a current, a temperature, or the like; and the BMS assembly 207 is configured to conduct necessary analysis and calculation for relevant state parameters to obtain additional state evaluation parameters for a battery system and conduct effective control of the battery 200 based on a specific protection control strategy to ensure the safe and reliable operation of the entire battery 200.

The embodiments of the present application also provide a production method of a battery to manufacture the battery 200 in any embodiment described above.

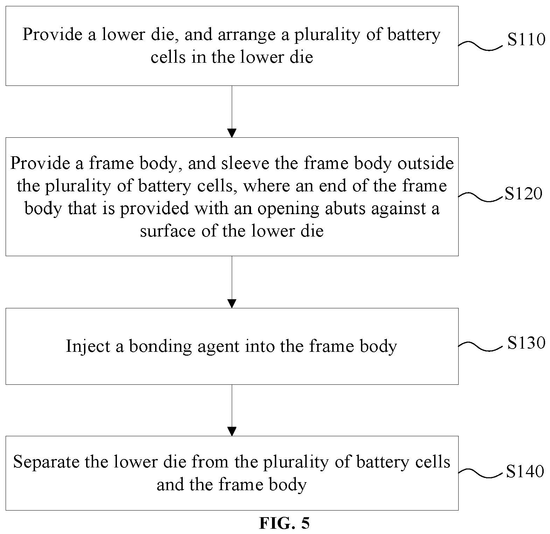

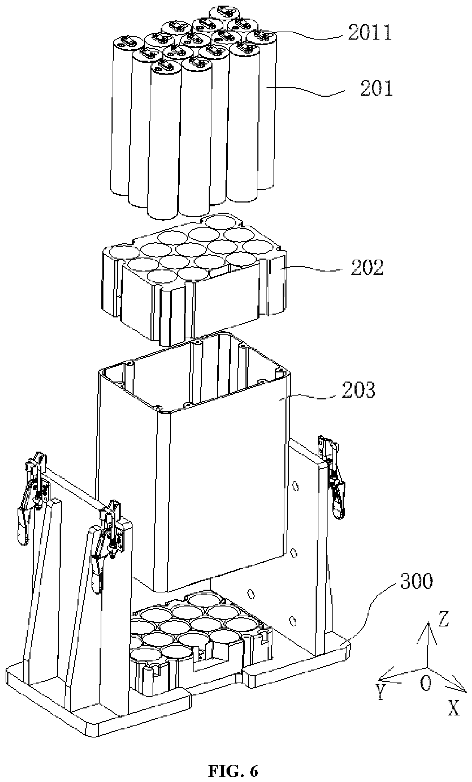

FIG. 5 is a flow chart of a production method of a battery in an embodiment of the present application and FIG. 6 is a schematic exploded structural view of each component of a battery manufactured according to the production method of a battery and a lower die. As shown in FIG. 5 and FIG. 6, in some embodiments, the production method of a battery includes:
S1 10: A lower die 300 is provided, and a plurality of battery cells 201 are arranged in the lower die 300.
S 120: A frame body 203 is provided, and the frame body 203 is sleeved outside the plurality of battery cells 201, where an end of the frame body 203 that is provided with an opening abuts against a surface of the lower die 300.
S130: A bonding agent 202 is injected into the frame body 203.
S140: The lower die 300 is separated from the plurality of battery cells 201 and the frame body 203.

In S1 10, an end of each of the plurality of battery cells 201 that is provided with an electrode terminal 2011 is arranged in the lower die 300; and the plurality of battery cells 201 are arranged in the lower die 300 to limit positions of the plurality of battery cells 201, such that the plurality of battery cells 201 are arranged according to a specific position relationship and are located in a zone defined by the frame body 203, and the plurality of battery cells 201 will not shake and move during the injection of the bonding agent 202 into the frame body 203. The limitation of the plurality of battery cells 201 by the lower die 300 may be conducted as follows: a groove may be formed on the lower die 300, and a battery cell 201 is placed in the groove for limitation; or a plurality of partition plates may be provided on the lower die 300, and the plurality of battery cells 201 may be arranged among the plurality of partition plates for limitation; or only a plane may be provided on the lower die 300 for alignment of the plurality of battery cells 201, and the plurality of battery cells 201 are placed in a specified order on the plane for confinement. The embodiments of the present application have no limitation on a manner of limitation of the plurality of battery cells 201 by the lower die 300.

In S120, the end of the frame body 203 that is provided with the opening 2032 abuts against the surface of the lower die 300, such that the bonding agent 202 can be prevented from flowing out through a gap between the frame body 203 and the lower die 300 before being cured.

In S130, when the bonding agent 202 is injected into the frame body 203, the bonding agent 202 may be injected downwards through a gap between any two battery cells 201, or may be injected downwards through a gap between any battery cell 201 and an inner wall of the frame body 203; or a bonding agent-injecting port may be formed on a side wall of the frame body 203, and the bonding agent 202 is injected into the frame body 203 through the bonding agent-injecting port. The embodiments of the present application have no limitation on a manner of injection of the bonding agent.

After the bonding agent 202 touches the lower die 300 when flowing downwards in the frame body 203, the bonding agent begins to be deposited on the lower die 300, and flows transversely along a gap between battery cells 201 and a gap between a battery cell 201 and the inner wall of the frame body 203 to fill each gap in the frame body 203, during which the assembly of the lower die 300, the plurality of battery cells 201, and the frame body 203 can be vibrated or vibrated to accelerate a transverse flow of the bonding agent 202.

In S140, the separation of the lower die 300 from the plurality of battery cells 201 and the frame body 203 includes a process of separating the lower die 300 from the plurality of battery cells 201 and a process of separating the lower die 300 from the frame body 203; and since the frame body 203 and the plurality of battery cells 201 have been bonded together by the bonding agent 202 during demolding, the above two processes can be conducted synchronously.

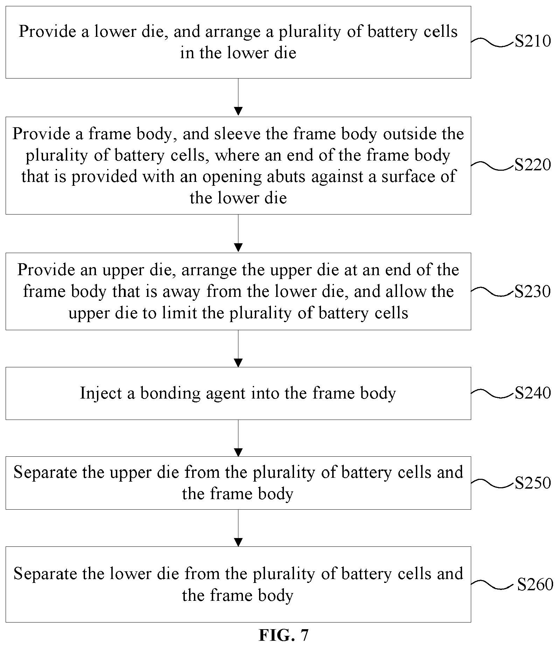

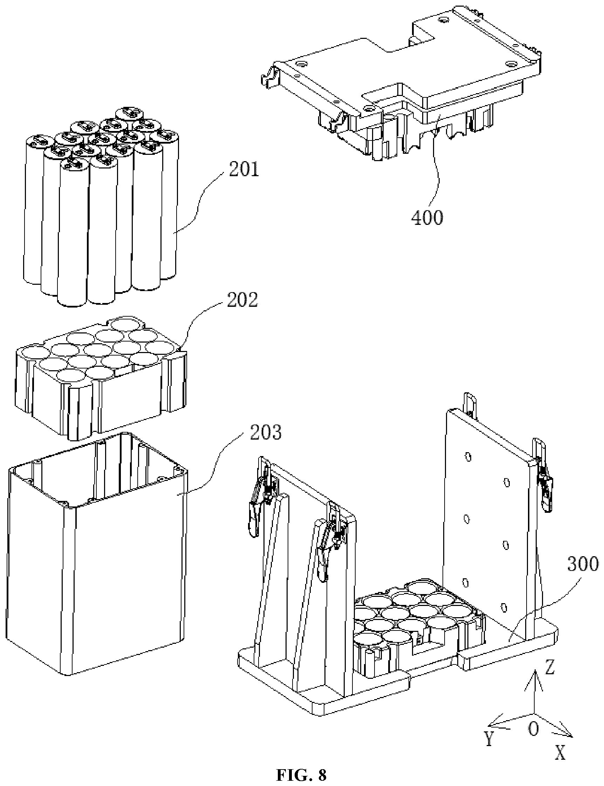

In the above solution, the frame body 203 cooperates with the lower die 300 during a production process of the battery 200 to define a flowing space for the bonding agent 202, such that the bonding agent 202 can only circulate in the space defined by the lower die 300 and the frame body 203, and connects the plurality of battery cells 201 and the frame body 203 as a whole in the space, thereby preventing the bonding agent 202 from flowing freely to cause poor bonding to a battery cell 201; and after the lower die 300 is separated from the plurality of battery cells 201 and the frame body 203, the frame body 203 can also serve as a part of the battery 200 to prevent a displacement among the battery cells 201 and improve the electrical connection stability of the battery 200. In addition, the frame body 203 is not only a part of the battery 200, but also a part of a die for manufacturing the battery 200, which reduces a demolding procedure after the bonding agent 202 is injected. FIG. 7 is a flow chart of a production method of a battery in another embodiment of the present application and FIG. 8 is a schematic exploded structural view of each component of a battery manufactured according to the production method of a battery and upper and lower dies. As shown in FIG. 7 and FIG. 8, in some embodiments, before the bonding agent 202 is injected into the frame body 203, the production method of the battery 200 further includes: an upper die 400 is provided, and the upper die 400 is arranged at an end of the frame body 203 that is away from the lower die 300, and is allowed to limit the plurality of battery cells 201.

After the bonding agent 202 is injected into the frame body 203, the production method of the battery 200 further includes: the upper die 400 is separated from the plurality of battery cells 201 and the frame body 203.

After the above steps are added, the production method of the battery is as follows:
S210: A lower die 300 is provided, and a plurality of battery cells 201 are arranged in the lower die 300.
S220: A frame body 203 is provided, and the frame body 203 is sleeved outside the plurality of battery cells 201, where an end of the frame body 203 that is provided with an opening abuts against a surface of the lower die 300.
S230: An upper die 400 is provided and arranged at an end of the frame body 203 that is away from the lower die 300, and the upper die 400 is allowed to limit the plurality of battery cells 201.
S240: A bonding agent 202 is injected into the frame body 203.
S250: The upper die 400 is separated from the plurality of battery cells 201 and the frame body 203.
S260: The lower die 300 is separated from the plurality of battery cells 201 and the frame body 203.

The upper die 400 and the lower die 300 can each be connected with the frame body 203 at a fixed position, such that positions of the lower die 300, the frame body 203, and the upper die 400 are fixed relatively. When one end of a battery cell 201 is arranged in the lower die 300 and the other end of the battery cell is arranged in the upper die 400, a position of the battery cell 201 in the frame body 203 is also fixed relatively, which facilitates the manufacture of a battery meeting requirements.

In S240, to inject the bonding agent 202 into the frame body 203, a bonding agent-injecting port may be formed on the upper die 400, and the bonding agent is injected into the frame body 203 through the bonding agent-injecting port on the upper die 400; or a bonding agent-injecting port may be formed on the frame body 203, and the bonding agent is injected into the frame body 203 through the bonding agent-injecting port on the frame body 203.

It should be noted that an amount of the bonding agent 202 injected into the frame body 203 may be less than a volume of the frame body 203, such that the bonding agent 202 does not contact the upper die 400, which prevents the bonding agent 202 from sticking to the upper die 400. As a result, in S250, the separation of the upper die 400 from the plurality of battery cells 201 and the separation of the upper die 400 from the frame body 203 are convenient and fast.

In the above solution, the upper die 400 limits the plurality of battery cells 201 from an end of each of the plurality of battery cells 201 that is away from the lower die 300, which can prevent the plurality of battery cells 201 from tilting or moving under an impact of the bonding agent 202 to deviate from a predetermined position, thereby further ensuring an accuracy of a position of a battery cell 201.

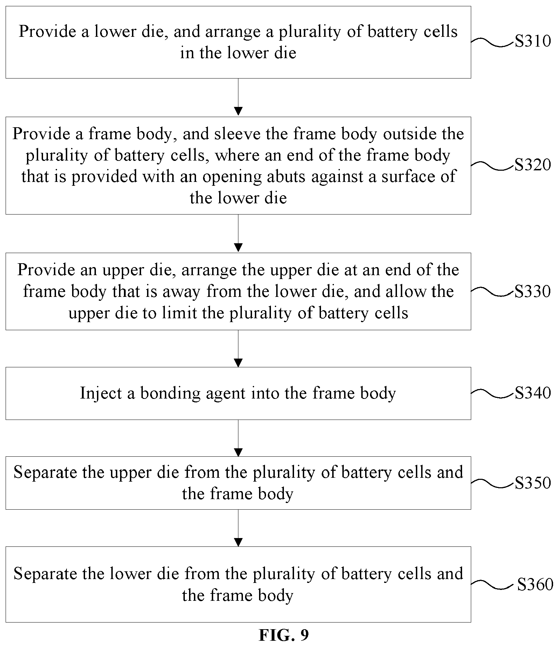

As shown in FIG. 9, in some embodiments, providing an upper die 400, arranging the upper die 400 at an end of the frame body 203 that is away from the lower die 300, and allowing the upper die 400 to limit the plurality of battery cells 201 further includes: the upper die 400 is connected with the lower die 300 to sandwich the plurality of battery cells 201 and the frame body 203 between the upper die 400 and the lower die 300.

After the above step is added, the production method of the battery is finally as follows:
S310: A lower die 300 is provided, and a plurality of battery cells 201 are arranged in the lower die 300.
S320: A frame body 203 is provided, and the frame body 203 is sleeved outside the plurality of battery cells 201, where an end of the frame body 203 that is provided with an opening abuts against a surface of the lower die 300.
S330: An upper die 400 is provided and arranged at an end of the frame body 203 that is away from the lower die 300, the upper die 400 is allowed to limit the plurality of battery cells 201, and the upper die 400 is connected with the lower die 300 to sandwich the plurality of battery cells 201 and the frame body 203 between the upper die 400 and the lower die 300.
S340: A bonding agent 202 is injected into the frame body 203.
S350: The upper die 400 is separated from the plurality of battery cells 201 and the frame body 203.
S360: The lower die 300 is separated from the plurality of battery cells 201 and the frame body 203.

Because the upper die 400 and the lower die 300 both can be used repeatedly, when the upper die 400 and the lower die 300 are connected, a connection structure can be arranged on the upper die 400 and the lower die 300 and can be used repeatedly; and because the battery cells 201 and the frame body 203 need to be assembled in the battery, if the connection structure is arranged on the battery cells 201 or the frame body 203, a utilization rate of the connection structure will be low, resulting in an increased cost.

Therefore, in the above solution, the battery cells 201 and the frame body 203 are sandwiched between the upper die 400 and the lower die 300 for fixing to avoid a cost waste. In addition, during demolding, it is only necessary to disconnect the upper die 400 and the lower die 300 to separate the battery cells 201 and the frame body 203 from the upper die 400 and the lower die 300, which simplifies a manufacturing process of the battery 200 and improves the manufacturing efficiency of the battery 200.

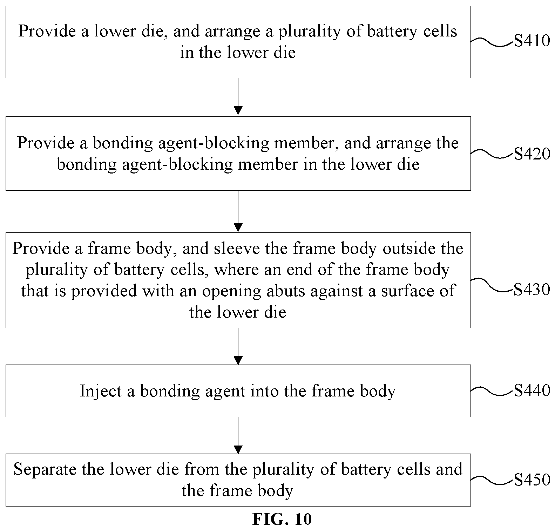

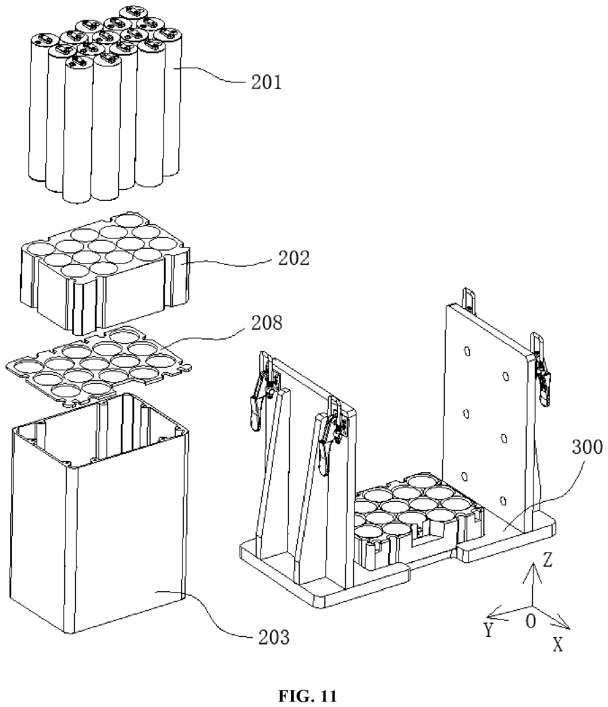

FIG. 10 is a flow chart of a production method of a battery in another embodiment of the present application and FIG. 11 is a schematic exploded structural view of each component of a battery manufactured according to the production method of a battery and a lower die. As shown in FIG. 10 and FIG. 11, in some embodiments, before the bonding agent 202 is injected into the frame body 203, the production method of the battery 200 further includes: a bonding agent-blocking member 208 is provided and arranged in the lower die 300 to prevent the bonding agent 202 from sticking to the lower die 300.

After the bonding agent-blocking member 208 is added, a possible flow of the production method of the battery is as follows:
S410: A lower die 300 is provided, and a plurality of battery cells 201 are arranged in the lower die 300.
S420: A bonding agent-blocking member 208 is provided and arranged in the lower die 300 to prevent the bonding agent 202 from sticking to the lower die 300.
S430: A frame body 203 is provided, and the frame body 203 is sleeved outside the plurality of battery cells 201, where an end of the frame body 203 that is provided with an opening abuts against a surface of the lower die 300.
S440: A bonding agent 202 is injected into the frame body 203.
S450: The lower die 300 is separated from the plurality of battery cells 201 and the frame body 203.

A structure of the bonding agent-blocking member 208 is the same as a structure of the bonding agent-blocking member 208 described in the embodiment about a structure of the battery, which is not repeated in this embodiment of the present application. The bonding agent-blocking member 208 isolates the lower die 300 and the bonding agent 202, such that the cured bonding agent 202 is stuck to the bonding agent-blocking member 208 instead of the lower die 300, which facilitates the separation of the lower die 300 from the battery cells 201 and the frame body 203. The bonding agent-blocking member 208 can be assembled with the battery cells 201 to produce the battery 200; or the bonding agent-blocking member 208 can be separated from the battery cells 201 and the bonding agent 202 by destroying the structure of the bonding agent-blocking member 208 without affecting a structure of the lower die 300, such that the lower die 300 can be further used to manufacture the battery 200, which improves the mass production efficiency of the battery 200.

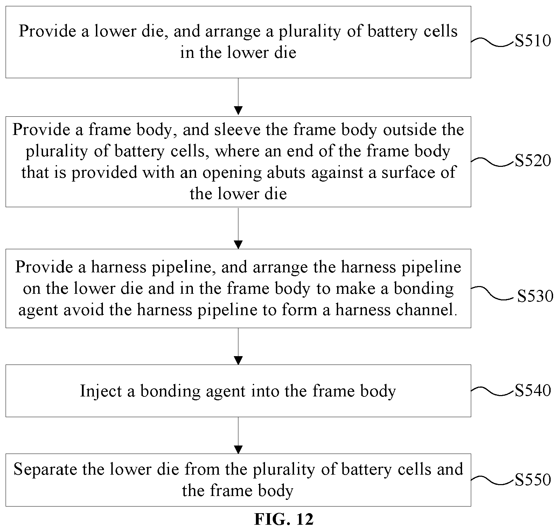

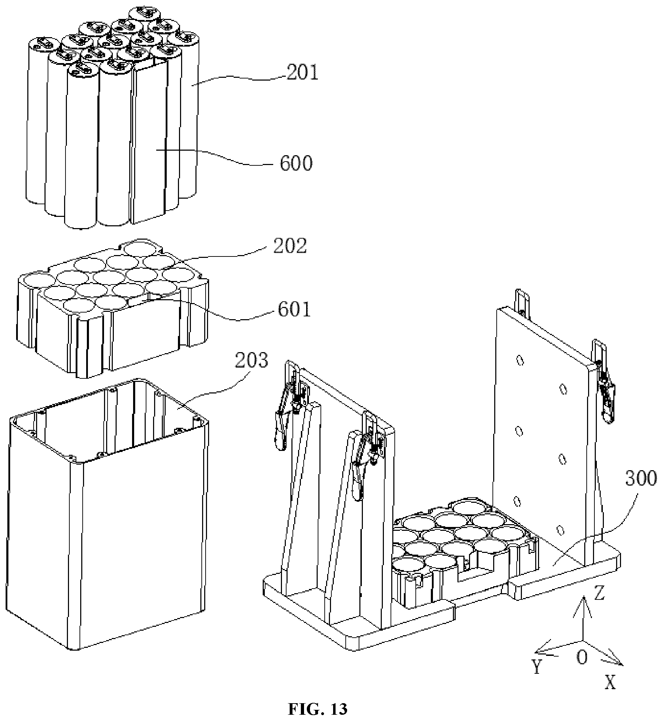

FIG. 12 is a flow chart of a production method of a battery in another embodiment of the present application and FIG. 13 is a schematic exploded structural view of each component of a battery manufactured according to the production method and a lower die. As shown in FIG. 12 and FIG. 13, in some embodiments, before the bonding agent 202 is injected into the frame body 203, the production method of the battery further includes: a harness pipeline 600 is provided and arranged on the lower die 300 and in the frame body 203 to make the bonding agent 202 avoid the harness pipeline 600 to form a harness channel 601.

After the above step is added, a possible flow of the production method of the battery is as follows:
S510: A lower die 300 is provided, and a plurality of battery cells 201 are arranged in the lower die 300.
S520: A frame body 203 is provided, and the frame body 203 is sleeved outside the plurality of battery cells 201, where an end of the frame body 203 that is provided with an opening abuts against a surface of the lower die 300.
S530: A harness pipeline 600 is provided and arranged on the lower die 300 and in the frame body 203 to make the bonding agent 202 avoid the harness pipeline 600 to form a harness channel 601.
S540: A bonding agent 202 is injected into the frame body 203.
S550: The lower die 300 is separated from the plurality of battery cells 201 and the frame body 203.

The harness pipeline 600 may be a round pipe or a square pipe. In addition, a shape and size of the harness pipeline 600 also needs to consider a space within the frame body 203 to avoid the battery cells 201. It should be noted that the harness pipeline 600 and the bonding agent 202 may be separated or not separated. When the harness pipeline 600 is not separated from the bonding agent 202, the harness pipeline 600 may be assembled into the battery 200, such that a harness in the battery 200 passes directly through the harness pipeline 600. When the harness pipeline 600 is separated from the bonding agent 202, after the harness pipeline 600 is removed, a harness channel 601 is formed on the bonding agent 202 to make upper and lower ends of a battery cell 201 communicated, and a harness in the battery 200 may pass through the harness channel 601.

In the above solution, since the harness pipeline 600 is located in the frame body 203, the harness channel 601 formed by the bonding agent 202 is also located in the frame body 203; and when the plurality of battery cells 201 are subjected to an electrical connection or data such as temperatures and voltages of the battery cells 201 are acquired, a harness needs to be connected to a battery cell 201, and the harness can be led from one end of the battery cell 201 to the other end of the battery cell through the harness channel 601 in the frame body 203 without passing through an outside of the frame body 203, which can prevent the harness from being damaged due to squeezing or dragging outside the frame body 203, thereby protecting the harness.

The embodiments of the present application also provide a manufacturing die of a battery to manufacture the battery in any embodiment described above.

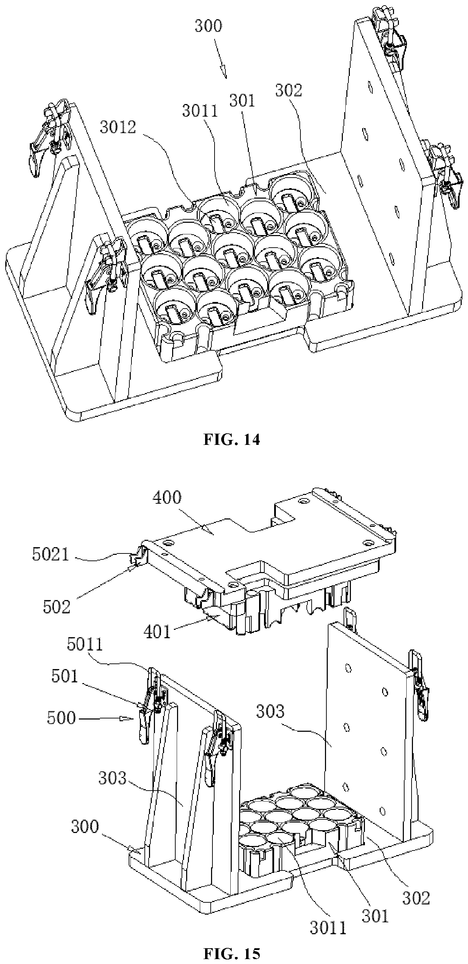

FIG. 14 is a schematic structural diagram of a manufacturing die of a battery in an embodiment of the present application. As shown in FIG. 14, in some embodiments, the manufacturing die includes a lower die 300, and the lower die 300 includes a lower positioning part 301 and a lower positioning surface 302, where the lower positioning part 301 is configured to fix a plurality of battery cells 201 from one end of each of the plurality of battery cells 201, and the lower positioning surface 302 is arranged around the lower positioning part 301 to abut against an end of a frame body 203 that is provided with an opening. The lower positioning part 301 may be a groove formed on the lower die 300, and a battery cell 201 is placed in the groove for fixation; or the lower positioning part 301 may be partition plates provided on the lower die 300, and a battery cell 201 may be arranged between the partition plates for fixation; or the lower positioning part 301 may be merely a plane provided on the lower die 300 for alignment of the battery cells 201, and the plurality of battery cells 201 are placed in a specified order on the plane for fixation.

The lower positioning surface 302 may be a plane or an arc surface, and a shape of the lower positioning surface 302 is the same as a shape of an end of the frame body 203 that is provided with an opening, which increases a contact area between the lower positioning surface 302 and an end face of the frame body 203, thereby increasing the stability of the frame body 203 during a manufacturing process of the battery 200. The lower positioning surface 302 may completely surround the lower positioning part 301 in one circle, or surround the lower positioning part 301 in less than one circle, or intermittently surround a periphery of the lower positioning part 301, as long as the frame body 203 can be fixed at a determined position.

In the above solution, the lower positioning part 301 fixes the plurality of battery cells 201 at predetermined positions; and because the lower positioning surface 302 is arranged around the lower positioning part 301, when the end of the frame body 203 that is provided with the opening abuts against the lower positioning surface 302, the plurality of battery cells 201 fixed by the lower positioning part 301 are just located in the accommodating cavity 2031 of the frame body 203, which allows the positioning between the plurality of battery cells 201 and the frame body 203. Therefore, the use of the die in the above solution can allow accurate positioning among the plurality of battery cells 201, and can also allow accurate positioning between the plurality of battery cells 201 and the frame body 203, resulting in high manufacturing accuracy and manufacturing efficiency of the battery 200.

Further, by arranging the lower positioning part 301 on the lower die 300, during demolding, the lower positioning part 301 and the lower die 300 together can be separated from the plurality of battery cells 201 and the bonding agent 202 and then used to fix a plurality of battery cells 201 during the next manufacturing process of the battery 200, which allows repeated use of the lower positioning part and the lower die and reduces a cost; and the lower positioning part 301 does not need to be bonded with the plurality of battery cells 201 and the bonding agent and serve as a part of the battery 200, which reduces components of the battery 200, simplifies a structure of the battery 200, reduces a weight of the battery 200, and further reduces a cost.

As shown in FIG. 14, in some embodiments, the lower positioning part 301 includes a plurality of lower positioning slots 3011, and an inner peripheral wall of each of the plurality of lower positioning slots 3011 coincides with an outer peripheral wall of a corresponding battery cell 201 to fix the battery cell 201.

The coincidence may refer to fitting or tangency. By making an inner peripheral wall of each of the plurality of lower positioning slots 3011 coincide with an outer peripheral wall of a corresponding battery cell 201 to fix the battery cell 201, both a movement of the battery cell 201 in a vertical direction and a movement of the battery cell 201 in another direction can be restricted to increase an accuracy of a position of the battery cell 201 and prevent a relative position shift of the battery cell 201 before the bonding agent 202 is cured.

As shown in FIG. 14, in some embodiments, the plurality of lower positioning slots 3011 each are provided with an avoidance groove 3012 to avoid an electrode terminal 2011 of a corresponding battery cell 201.

During a manufacturing process of the battery, a part of a battery cell 201 contacting the lower die 300 may be squeezed, and once an electrode terminal 2011, as an important component of the battery cell 201 for electrical connection with an electric device, is damaged, the charge and discharge performance of the battery 200 will be seriously affected; and by making the electrode terminal 2011 located in the avoidance groove 3021, the electrode terminal 2011 is not easily squeezed and damaged, which improves a yield rate of the battery 200.

FIG. 15 is a schematic structural diagram of a manufacturing die of a battery in another embodiment of the present application. As shown in FIG. 15, in some embodiments, the manufacturing die further includes an upper die 400; and the upper die 400 includes an upper positioning part 401, and the upper positioning part 401 is arranged corresponding to the lower positioning part 301 and is configured to fix the plurality of battery cells 201 from the other end of each of the plurality of battery cells 201.

The upper positioning part 401 may be a groove formed on the upper die 400, and an end of a battery cell 201 is placed in the groove for fixation; or the upper positioning part 401 may be partition plates provided on the upper die 400, and a battery cell 201 may be arranged between the partition plates for fixation; or the upper positioning part 401 may be also merely a plane provided on the upper die 400 for alignment of the battery cells 201, and ends of the plurality of battery cells 201 abut against the plane for positioning.

The arrangement of the upper positioning part 401 corresponding to the lower positioning part 301 means that, when the upper positioning part 401 of the upper die 400 and the lower positioning part 301 of the lower die 300 are arranged oppositely and one end of each of the plurality of battery cells 201 is fixed by the lower positioning part 301, the other end of each of the plurality of battery cells 201 can be located at a corresponding position on the upper positioning part 401 and can be just fixed by the upper positioning part 401.

In the above solution, the plurality of battery cells 201 are further fixed by the upper positioning part 401 of the upper die 400, and the upper positioning part 401 defines a position of each of the plurality of battery cells 201 from the other end of the battery cell 201 to prevent the battery cell 201 from tilting and moving, thereby increasing an accuracy of a position of the battery cell 201.

Further, by arranging the upper positioning part 401 on the upper die 400, during demolding, the upper positioning part 401 and the upper die 400 together can be separated from the plurality of battery cells 201 and the bonding agent 202 and then used to fix a plurality of battery cells 201 during the next manufacturing process of the battery 200, which allows repeated use of the upper positioning part and the upper die and reduces a cost; and the upper positioning part 401 does not need to be bonded with the plurality of battery cells 201 and the bonding agent and serve as a part of the battery 200, which reduces components of the battery 200, simplifies a structure of the battery 200, reduces a weight of the battery 200, and further reduces a cost.

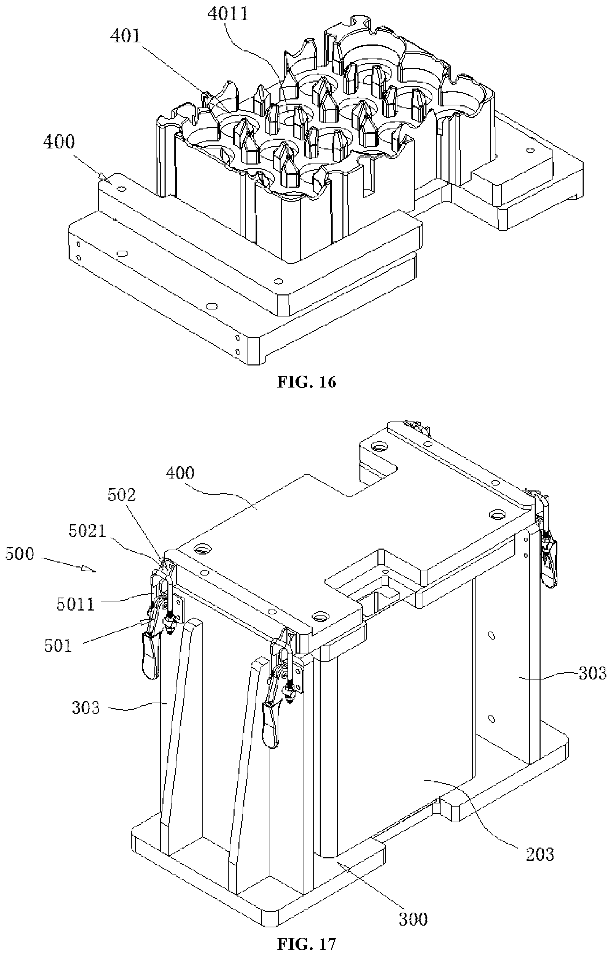

FIG. 16 is a schematic structural diagram of an upper die in an embodiment of the present application. As shown in FIG. 16, in some embodiments, the upper positioning part 401 includes a plurality of upper positioning slots 4011, and an inner peripheral wall of each of the plurality of upper positioning slots 4011 coincides with an outer peripheral wall of a corresponding battery cell 201 to fix the battery cell 201. The coincidence may refer to fitting or tangency. By making an inner peripheral wall of each of the plurality of upper positioning slots 4011 coincide with an outer peripheral wall of a corresponding battery cell 201 to fix the battery cell 201, both a movement of the battery cell 201 in a vertical direction and a movement of the battery cell 201 in another direction can be restricted to prevent the battery cell 201 from shaking, thereby increasing an accuracy of a position of the battery cell 201.

FIG. 17 is a schematic structural diagram of an assembly of an upper die and a lower die. As shown in FIG. 17, in some embodiments, the manufacturing die further includes a connection member, and the connection member is arranged on the lower die 300 and/or the upper die 400 and is configured to connect the upper die 400 and the lower die 300 to sandwich the plurality of battery cells 201 and the frame body 203 between the upper die 400 and the lower die 300.

The connection member may be merely arranged on the upper die 400 or merely arranged on the lower die 300, or a part of the connection member is arranged on the lower die 300, and a part of the connection member is arranged on the upper die 400; and the connection of the upper die 400 and the lower die 300 by the connection member can be conducted through a bolt or clamping, which is not limited by the embodiments of the present application.

It can be seen from FIG. 17 that, during a manufacturing process of the battery 200, one end of the frame body 203 abuts against the lower die 300 and the other end of the frame body 203 abuts against the upper die 400; and the upper die 400 is connected with the lower die 300, with the frame body 203 sandwiched between the upper die and the lower die.

It should be emphasized that, although a structure in which the battery cells 201 are sandwiched between the upper die 400 and the lower die 300 is not shown in FIG. 17, those skilled in the art may conceive based on the preceding embodiments and accompanying drawings thereof that the battery cells 201 and the frame body 203 together are sandwiched between the upper die 400 and the lower die 300 to prevent the battery cells 201 from shaking during injection of the bonding agent.

In the above solution, the upper die 400 and the lower die 300 both can be used repeatedly, and thus the connection member arranged on the lower die 300 and/or the upper die 400 can be used repeatedly, which can avoid a cost waste. In addition, during demolding, it is only necessary to disconnect the upper die 400 and the lower die 300 to separate the battery cells 201 and the frame body 203 from the upper die 400 and the lower die 300, which simplifies a manufacturing process of the battery 200.

As shown in FIG. 15 and FIG. 17, in some embodiments, the lower die 300 includes a side plate 303, the side plate 303 is located at a side of the lower die 300 at which the lower positioning part 301 is located, and the side plate 303 is connected with the upper die 400 through the connection member.

The side plate 303 extends in a direction of the upper die 400 to approach the upper die 400, such that the upper die 400 is connected with the lower die 300 through the side plate 303; and at least two side plates 303 are provided to limit a position of the upper die 400 relative to the lower die 300 from different positions and directions.

In the above solution, the side plate 303 is close to the upper die 400 and thus is connected with the upper die in close proximity, which can reduce a volume of the connection member.

As shown in FIG. 15 and FIG. 17, in some embodiments, the connection member includes a buckle 500.

FIG. 15 and FIG. 17 each show a structure of a buckle 500. The buckle 500 includes a body part 501 and a lapping part 502, where the body part 501 includes a rotatable hanging ring 5011 and the lapping part 502 includes a hook 5021. When the upper die 400 and the lower die 300 approach to each other, the hook 5021 and the hanging ring 5011 approach to each other until the hook 5021 is located in a rotation range of the hanging ring 5011, and then the hanging ring 5011 is rotated such that the hanging ring 5011 is set on the hook 5021 to allow a connection between the body part 501 and the lapping part 502; and a connected state is shown in FIG. 17. Of course, the buckle 500 may also be another possible structure, and the embodiments of the present application have no limitation on a structure of the buckle 500, as long as a connection between the upper die 400 and the lower die 300 can be allowed.

When the upper die 400 and the lower die 300 are connected through the buckle 500, the connection and separation of the upper die 400 and the lower die 300 both are simple and fast, which can improve the manufacturing efficiency of the battery 200.

The embodiments of the present application also provide an electric device including the battery 200 described in any embodiment in the first aspect of the present application.

In the above solution, the battery 200 has excellent electrical connection stability and thus can stably output a current to power the electric device, and the components and weight of the battery are reduced.

In summary, in the embodiments of the present application, by arranging the plurality of battery cells 201 in the accommodating cavity 2031 of the frame body 203 and connecting the plurality of battery cells 201 and the frame body 203 through the bonding agent 202, positions of the plurality of battery cells 201 are relatively fixed, which improves the electrical connection stability of the battery 200.

Those skilled in the art can understand that, although some embodiments herein include some features included in other embodiments, a combination of features of different embodiments falls within the scope of the present application and forms a different embodiment. For example, in the claims, any one of the claimed embodiments can be used in any combination.

The above embodiments are provided merely to describe the technical solutions of the present application, and are not intended to limit the present application. Although the present application is described in detail with reference to the above embodiments, those of ordinary skill in the art should understand that they can still modify the technical solutions described in the above embodiments, or make equivalent substitutions to some technical features therein. These modifications or substitutions do not make the essence of the corresponding technical solutions depart from the spirit and scope of the technical solutions of the embodiments of the present application.

## Claims

1. A battery, comprising:
a frame body, wherein the frame body is provided with an accommodating cavity, and the accommodating cavity is provided with an opening in a first direction;
a plurality of battery cells, wherein the plurality of battery cells are arranged in the accommodating cavity, and electrode terminals of the plurality of battery cells face towards the opening; and
a bonding agent, wherein the bonding agent is arranged in the accommodating cavity and is used to connect the plurality of battery cells and the frame body.

2. The battery according to claim 1, wherein the bonding agent is in a columnar structure in the accommodating cavity, and an outer peripheral surface of the columnar structure is connected with an inner surface of the frame body.

3. The battery according to claim 1 or 2, wherein the bonding agent is in the columnar structure in the accommodating cavity, the columnar structure is provided with a connection hole in the first direction, and an inner peripheral surface of the connection hole is connected with an outer peripheral surface of each of the plurality of battery cells.

4. The battery according to any one of claims 1 to 3, wherein a height of the bonding agent in the first direction is less than a height of each of the plurality of battery cells in the first direction.

5. The battery according to any one of claims 1 to 4, further comprising a bonding agent-blocking member, wherein the bonding agent-blocking member is connected with an end of the bonding agent in the first direction.

6. A production method of a battery, used to manufacture the battery according to any one of claims 1 to 5, and comprising:
providing a lower die, and arranging a plurality of battery cells in the lower die;
providing a frame body, and sleeving the frame body outside the plurality of battery cells, wherein an end of the frame body that is provided with an opening abuts against a surface of the lower die;
injecting a bonding agent into the frame body; and
separating the lower die from the plurality of battery cells and the frame body.

7. The production method according to claim 6, wherein before the bonding agent is injected into the frame body, the production method further comprises: providing an upper die, arranging the upper die at an end of the frame body that is away from the lower die, and allowing the upper die to limit the plurality of battery cells; and
after the bonding agent is injected into the frame body, the production method further comprises: separating the upper die from the plurality of battery cells and the frame body.

8. The production method according to claim 7, wherein the step of providing an upper die, arranging the upper die at an end of the frame body that is away from the lower die, and allowing the upper die to limit the plurality of battery cells further comprises: connecting the upper die with the lower die to sandwich the plurality of battery cells and the frame body between the upper die and the lower die.

9. The production method according to any one of claims 6 to 8, wherein before the bonding agent is injected into the frame body, the production method further comprises: providing a bonding agent-blocking member, and arranging the bonding agent-blocking member in the lower die to prevent the bonding agent from sticking to the lower die.

10. The production method according to any one of claims 6 to 9, wherein before the bonding agent is injected into the frame body, the production method further comprises: providing a harness pipeline, and arranging the harness pipeline on the lower die and in the frame body to make the bonding agent avoid the harness pipeline to form a harness channel.

11. A manufacturing die of a battery, used to manufacture the battery according to any one of claims 1 to 5, wherein
the manufacturing die comprises a lower die, and the lower die comprises:
a lower positioning part, wherein the lower positioning part is configured to fix a plurality of battery cells from one end of each of the plurality of battery cells, and
a lower positioning surface, wherein the lower positioning surface is arranged around the lower positioning part to abut against an end of a frame body that is provided with an opening.

12. The manufacturing die of a battery according to claim 11, wherein the lower positioning part comprises a plurality of lower positioning slots, and an inner peripheral wall of each of the plurality of lower positioning slots coincides with an outer peripheral wall of a corresponding battery cell to fix the battery cell.

13. The manufacturing die of a battery according to claim 12, wherein the plurality of lower positioning slots each are provided with an avoidance groove to avoid an electrode terminal of a corresponding battery cell.

14. The manufacturing die of a battery according to any one of claims 11 to 13, wherein the manufacturing die further comprises an upper die; and the upper die comprises an upper positioning part, and the upper positioning part is arranged corresponding to the lower positioning part and is configured to fix the plurality of battery cells from the other end of each of the plurality of battery cells.

15. The manufacturing die of a battery according to claim 14, wherein the upper positioning part comprises a plurality of upper positioning slots, and an inner peripheral wall of each of the plurality of upper positioning slots coincides with an outer peripheral wall of a corresponding battery cell to fix the battery cell.

16. The manufacturing die of a battery according to claim 14 or 15, wherein the manufacturing die further comprises a connection member, and the connection member is arranged on the lower die and/or the upper die and is configured to connect the upper die and the lower die to sandwich the plurality of battery cells and the frame body between the upper die and the lower die.

17. The manufacturing die of a battery according to claim 16, wherein the lower die comprises a side plate, the side plate is located at a side of the lower die at which the lower positioning part is located, and the side plate is connected with the upper die through the connection member.

18. The manufacturing die of a battery according to claim 16 or 17, wherein the connection member comprises a buckle.

19. An electric device comprising the battery according to any one of claims 1 to 5.
